# EUROPÄISCHE PATENTANMELDUNG

(11) **EP 0 572 931 A1**
(43) Veröffentlichungstag der Anmeldung: **08.12.1993**
(21) Anmeldenummer: 93108627.6
(22) Anmeldetag: 28.05.1993
(51) Int. Cl.: F16L 37/30, F16L 29/00

(54) **Kupplung zur Verbindung eines feststehenden Rohres mit einem beweglichen Rohr oder Schlauch**

(30) Priorität: 04.06.1992 DE 4218372
(71) Anmelder: Pfannenschmidt, Erhard, Ing.grad., D-22147 Hamburg (DE)
(72) Erfinder: Pfannenschmidt, Erhard, Ing.grad., D-22147 Hamburg (DE)
(74) Vertreter: Dipl.-Ing. H. Hauck, Dipl.-Ing. E. Graalfs, Dipl.-Ing. W. Wehnert, Dr.-Ing. W. Döring, Dr.-Ing. N. Siemons

(57) **Zusammenfassung**

Kupplung zur Verbindung eines feststehenden Rohres mit einem beweglichen Rohr oder Schlauch, bei der jede Kupplungshälfte als Kugelhahn ausgeführt ist, wobei im gekuppelten Zustand die Kugelhahngehäuse totraumfrei aneinanderstoßen und über eine stirnseitige Ringdichtung gegeneinanderliegend und im Stoßbereich radial abgedichtet sind und bei der die Kupplungshälften mittels einer Verriegelungsvorrichtung im gekuppelten Zustand gehalten sind, die nur entriegelbar ist, wenn eine mit den Schaltwellen der Kugelhähne in Eingriff stehende Sicherheitsvorrichtung in Freigabestellung ist, wobei die Freigabestellung erreicht ist, wenn beide Kugeln in Schließstellung sind, wobei an einer Nockenscheibe (46) ein Mitnehmerabschnitt (52) vorgesehen ist, der mit einem Mitnahmeabschnitt (66) der zweiten Nockenscheibe (64) so zusammenwirkt, daß die zweite Nockenscheibe (64) bei Drehung der ersten Nockenscheibe (64) um einen ersten Mitnahmeweg in beiden Drehrichtungen von der ersten Nockenscheibe (46) mitgenommen wird, die erste Nockenscheibe (46) während eines zweiten Mitnahmewegs in beiden Drehrichtungen über Kupplungsmittel mit der zugehörigen Schaltwelle (18) koppelbar ist, jedoch entlang des ersten Mitnahmewegs von der zugehörigen Schaltwelle (18) entkuppelt ist.

## Beschreibung

Die Erfindung bezieht sich auf eine Kupplung zur Verbindung eines feststehenden Rohres mit einem beweglichen Rohr oder Schlauch nach dem Oberbegriff des Patentanspruchs 1.

Aus der DE 36 02 775 oder dem DE-GM 91 12 352 ist eine Kupplung der genannten Art bekanntgeworden, bei der jede Kupplungshälfte als Kugelhahn ausgeführt ist. Die Kupplungshälften stoßen so aneinander, daß kein Totraum zwischen den Kupplungshälften gebildet ist, wenn die Kugelküken in Schließstellung sind. Dies bedingt, daß die Kugeln ineinandergreifen, eine mithin kugelige Ausnehmung aufweist, in die die Kugel des benachbarten Hahns eingreift. Bei den bekannten Kupplungen sind mit den Schaltwellen der Kugelhähne Nockenscheiben verbunden, die zusammenwirken und sicherstellen, daß die Schaltwellen zeitlich nur nacheinander betätigt werden können. Würde eine derartige Maßnahme nicht vorgesehen, könnte es zu einem Blockieren der Kugelküken kommen und vor allen Dingen zu einer Beschädigung. Bei den bekannten Kupplungen ist indessen erforderlich, mit einem geeigneten Werkzeug oder einem Servoantrieb getrennt an die einzelnen Schaltwellen zu gehen. Dies ist jedoch verhältnismäßig umständlich und überfordert zuweilen das Bedienungspersonal.

Aus der US 5 083 588 ist eine Kupplung bekanntgeworden, deren Absperrorgane als Kugelhähne ausgebildet sind, die totraumfrei zusammenwirken. Ein Kugelküken weist eine kugelabschnittförmige Vertiefung auf, in die das andere Kugelküken in der Schließstellung eingreift. Eine Betätigung der beiden Kugelhähne bei geschlossener Kupplung ist nur nacheinander möglich. Zu diesem Zweck weist eine Kupplungshälfte eine Hülse auf, die auf das zylindrische Gehäuse der anderen Kupplungshälfte geschoben wird. Die Kugelküken wirken auf gegenüberliegenden Seiten mit Schaltwellen zusammen, und jede Schaltwelle ist mit einer Nockenscheibe versehen. Werden die Kupplungshälften zusammengebracht, betätigt die Hülse über Betätigungsstifte die Nockenscheiben nacheinander. Beim Trennen der Kupplung wird ebenfalls ein sequentielles Schließen der Kugelhähne durchgeführt. In der Verbindungsstellung sind die Schaltwellen der Kugelhähne durch die Hülse verdeckt. Bei der bekannten Kupplung können daher die Kugelhähne während der Verbindung der Kupplungshälften nicht betätigt werden, um die Leitungsverbindung zu sperren. Die bekannte Kupplung erfordert einen Verstellantrieb zur Betätigung z.B. der losen Kupplungshälfte relativ zur Festhälfte, um die Kupplungshälften zu verbinden und das beschriebene Öffnen bzw. Schließen der Kugelhähne zu bewerkstelligen. Zusammenwirkende Führungen sorgen dafür, daß die Kupplungshälften genau axial ausgerichtet sind, damit eine Verbindung zustande kommt. Im übrigen erfordert die bekannte Kupplung, daß der Verstellantrieb zum Verbinden der Kupplungshälften miteinander an der Loshälfte sitzt.

Der Erfindung liegt daher die Aufgabe zugrunde, die Kugelhähne der gattungsgemäßen Kupplung über eine einzige Drehbetätigung öffnen und schließen zu können.

Diese Aufgabe wird erfindungsgemäß gelöst durch die Merkmale des Patentanspruchs 1.

Bei der erfindungsgemäßen Kupplung ist die mit einer Schaltwelle verbundene Nockenscheibe mit einem Mitnehmerabschnitt versehen, der mit einem Mitnabmeabschnitt der zweiten Nockenscheibe so zusammenwirkt, daß die zweite Nockenscheibe bei Drehung der ersten Nockenscheibe um einen ersten Mitnahmeweg in beiden Richtungen von der Nockenscheibe mitgenommen wird. Während des ersten Mitnahmewegs wird mithin der zweite Kugelhahn geöffnet bzw. geschlossen. Die zweite Nockenscheibe legt noch einen zweiten Mitnahmeweg zurück und ist während dieses Mitnahmewegs in beiden Richtungen mit der Schaltwelle des ersten Kugelhahns gekoppelt. Während des ersten Mitnahmewegs ist jedoch die erste Nockenscheibe von der zugehörigen Schaltwelle entkoppelt. Die erste Nockenscheibe legt daher einen größeren Weg als die zweite Nockenscheibe zurück. Bei einer Verstellung der Kugelküken von der Schließin die Öffnungsstellung und umgekehrt ist eine 90°-Drehung erforderlich. Die erste Nockenscheibe legt daher einen Weg von 180° zurück, wobei sie während der Drehung entlang des ersten Mitnahmewegs lediglich die zweite Nockenscheibe betätigt und nur während des zweiten Mitnahmewegs die zugehörige Schaltwelle verdreht. Auf diese Weise ist ein Getriebe vorgesehen, das eine sequentielle Betätigung der beiden Kugelhähne ermöglicht dergestalt, daß sie einander nicht blockieren und eine Beschädigung der Kugelküken vermieden ist.

Es sind verschiedene konstruktive Verwirklichungen der Erfindung denkbar. Im Hinblick auf den Mitnehmerabschnitt sieht eine Ausgestaltung der Erfindung vor, daß ein Mitnehmerstift an der ersten Nockenscheibe mit einem radialen Schlitz der zweiten Nockenscheibe zusammenwirkt. Lediglich während des ersten Mitnahmewegs ist der Mitnehmerstift im Mitnahmeschlitz der zweiten Nockenscheibe. Wird die erste Nockenscheibe weitergedreht, entfernt sich der Mitnehmerstift aus dem Mitnahmeschlitz. In der Schließstellung beider Kugelhähne erstreckt sich die Achse des Mitnahmeschlitzes annähernd senkrecht zur Linie, der sich durch die Mitte der ersten Nockenscheibe und durch ihren Mitnehmerstift erstreckt. Auf diese Weise ist die zweite Nockenscheibe wirksam verriegelt, und ein Ergreifen der zweiten Nockenscheibe zur Betätigung der Schaltwelle des zweiten Kugelhahns auf gewollte oder unbeabsichtigte Art und Weise ist vermieden.

Nach einer Ausgestaltung der Erfindung wird die freie Drehbarkeit der ersten Nockenscheibe relativ zur zugehörigen Schaltwelle dadurch erreicht, daß sich ein Kupplungsstift, der mit der Schaltwelle verbunden ist, durch einen kreisbogenförmigen Schlitz in der ersten Nockenscheibe erstreckt. Während einer ersten Betätigung kommt der Kupplungsstift an das Ende des Schlitzes an. Wird jedoch die erste Nockenscheibe weitergedreht, nimmt die erste Nockenscheibe die Schaltwelle mit. Bei der umgekehrten Bewegung würde wegen des Zusammenwirkens von Schlitz und Stift die Schaltwelle unbetätigt bleiben. Daher ist außerdem ein zweites Kupplungsmittel vorgesehen, welches in der entgegengesetzten Drehrichtung Schaltwelle und erste Nockenscheibe kuppelt, bis der erste Mitnahmeweg erreicht ist. Dies geschieht nach einer Ausgestaltung der Erfindung etwa dadurch, daß der Kupplungsstift auf einer auf der Schaltwelle sitzenden Kupplungsscheibe angebracht ist, die eine Kupplungsausnehmung aufweist, an der ersten Nockenscheibe ein federnd gelagerter Druckstift vorgesehen ist, der während des zweiten Mitnahmewegs zur Kupplungsausnehmung ausgerichtet ist und durch Betätigung von einer Nockenfläche in diese eingreift.

Bei der erfindungsgemäßen Kupplung kann die Loshälfte bildende Kupplungshälfte von Hand erfaßt und gegen die Festhälfte bildende Kupplungshälfte angesetzt werden. Durch das Vorsehen geeigneter Steuervorkehrungen kann dann im Anschluß automatisch das Verriegeln der Kupplungshälften und das Öffnen der Kugelhähne durchgeführt werden, indem ein erster Antrieb vorzugsweise der Festhälfte zugeordnet ist zur Betätigung der zugehörigen Schaltwelle sowie ein zweiter Verstellantrieb, der eine geeignete Verbindungs- und Trennvorrichtung betätigt, um die beiden Kupplungshälften miteinander zu verriegeln. So kann eine der Kupplungshälften einen Schalter aufweisen, bei dessen Betätigung der zweite Verstellantrieb betätigt wird, um die Kupplungshälften miteinander zu verriegeln. Sobald die Verriegelung stattgefunden hat, wird ein zweiter Schalter betätigt, der nunmehr die Betätigung des ersten Verstellantriebs freigibt. Danach kann zum Beispiel mit Hilfe eines Tastschalters das Öffnen beider Kugelhähne in Folge durchgeführt werden. Sobald dies geschehen ist, ist ein dritter Schalter betätigbar, der verhindert, daß ein Trennen der Kupplungshälften stattfindet, was über einen weiteren Tastschalter zum Beispiel in Gang gesetzt werden kann, aber nur, wenn zunächst der zweite Verstellantrieb betätigt worden ist. Ein vierter Schalter stellt dies fest, so daß das Trennen der Kupplungshälften durch Entriegeln über den zweiten Verstellantrieb stattfinden kann.

Die beschriebene Steuervorrichtung kann auch mit einer sogenannten Abreißsicherung zusammenwirken, die zum Beispiel den Zug mißt, der an der Leitung bzw. dem Schlauch wirkt, an dem eine Kupplungshälfte befestigt ist. Übersteigt dieser Zug einen vorgegebenen Wert, ist es zweckmäßig, wenn die Kupp-lungshälften getrennt werden. Die Zugsicherung erzeugt ein Signal, wodurch der erste Verstellantrieb betätigt wird. Erst danach kann ein weiteres Signal zum Trennen der Kupp-lung über den zweiten Verstellantrieb erzeugt werden.

Ein Ausführungsbeispiel der Erfindung wird nachfolgend anhand von Zeichnungen näher erläutert.
- Fig. 1: zeigt die Seitenansicht teilweise im Schnitt einer Kupplung nach der Erfindung.
- Fig. 2: zeigt einen Schnitt durch die Darstellung nach Fig. 1 entlang der Linie 2-2.
- Fig. 3: zeigt einen Schnitt durch die Darstellung nach Fig. entlang der Linie 3-3 in der Schließstellung der Kugelhähne.
- Fig. 4: zeigt eine ähnliche Ansicht wie Fig. 3 in der Öffnungstellung der Kugelhähne.
- Fig. 5: zeigt schematisch ein Schaltschema zur elektropneumatischen Steuerung der Kupplung nach den Figuren 1 bis 4.

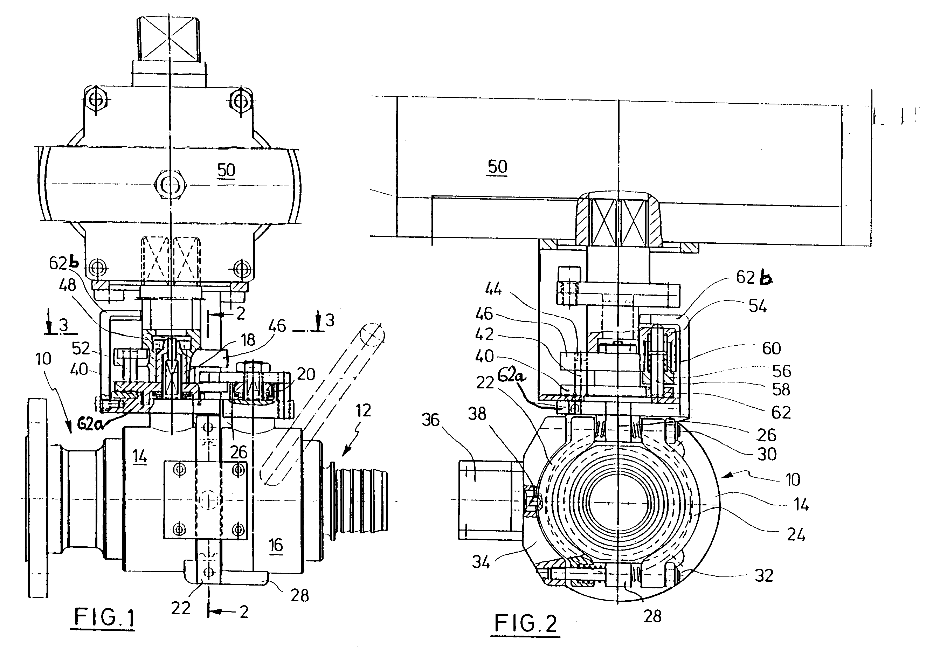

In den Figuren 1 bis 4 ist eine Kupplung in gekuppelter Stellung dargestellt mit einer die Festhälfte bildenden Kupplungshälfte 10 und einer die Loshälfte bildenden Kupplungshälfte 12. Die Festhälfte ist zum Beispiel mit einem stationären Rohr verbunden. Die Loshälfte ist zum Beispiel mit einem Schlauch verbunden. Beide Kupplungshälften 10, 12 weisen Kugelhahngehäuse 14, 16 auf, die Kugelküken lagern (nicht gezeigt). Die Kugelküken sind mit Schaltwellen 18, 20 verbunden. Auf den Aufbau der Kugelhähne 14, 16 soll nicht im einzelnen eingegangen werden, da er konventionell ist.

Wie lediglich in Fig. 2 angedeutet, weisen die Kupplungshälften 10, 12 an den einander zugekehrten Stirnseiten im Querschnitt keilförmig umlaufende Rippen oder Bunde auf, die von der Stirnseite fort Keilflächen bilden. Eine Verbindungs- und Trennvorrichtung weist backenartige Klemmbügel 22, 24 auf, die eine im Querschnitt trapezförmige Nut aufweisen, die im Gesamtquerschnitt dem der Bunde entspricht. Werden die Klemmbügel 22, 24 aufeinander zu bewegt, werden die Kupplungshälften 10, 12 axial aneinandergepreßt und fest miteinander gekuppelt. Mit der Kupplungshälfte 10 sind Führungsvorsprünge 26, 28 fest verbunden, welche mit Führungsflächen der Kupplungshälfte 12 zusammenwirken, um die Kupplungshälften 10, 12 beim Aufeinanderzubewegen in Drehrichtung zu orientieren und außerdem zu zentrieren. Lagerstifte 30, 32 erstrecken sich durch Bohrungen der Klemmbügel 22, 24 sowie durch eine Bohrung der Führungsvorsprünge 26, 28. Sie sind in einem Joch 34 eingeschraubt. Auf das andere Ende der Stifte 30, 32 sind Muttern geschraubt. Auf jedem Stift sitzen zwei Schraubenfedern auf gegenüberliegenden Seiten des Führungsvorsprungs 26, 28 und greifen in entsprechende Sackbohrungen der Bügel 22, 24 ein, um diese von den Vorsprüngen 26, 28 fort vorzuspannen. Mit dem Joch 34 ist ein Verstellzylinder 36 fest verbunden, der mit einer Stange 38 auf den Klemmbügel 22 wirkt, um beide gegeneinander vorzuspannen und die Kupplungshälften 10, 12 zu verbinden.

Insoweit gleicht die beschriebene Kupplung der bekannten Kupplung nach dem DE-GM 91 12 352.

Auf der Schaltwelle 18 für den Kugelhahn 14 ist drehfest eine Kupplungsscheibe 40 angeordnet, deren Lagerung und Aufbau im einzelnen nicht beschrieben werden soll. Wie aus Fig. 2 hervorgeht, sitzt auf der Kupplungsscheibe 40 ein Kupplungsstift 42, der in einen kreisbogenförmigen Schlitz 44 einer ersten Nockenscheibe 46 eingreift. Die Nockenscheibe 46 steht in Dreheingriff mit einer Hülse 48, die von einem Verstellantrieb 50 in entgegengesetzten Drehrichtungen antreibbar ist. Mit der Nockenscheibe 46 ist ein nach unten ragender Mitnehmerstift 52 verbunden. Die Nockenscheibe 46 hält zwei teleskopisch ineinandergesteckte Hülsen 54, 56, die einen Druckstift 58 beweglich lagern und der von einer Feder 60 in Richtung von der Scheibe 40 fort vorgespannt ist. In der Darstellung nach Fig. 2 greift der Druckstift 58 in eine Kupplungsausnehmung 62 der Scheibe 40.

Mit einer Lagerplatte 62a auf der Festhälfte 10, welche den Servoantrieb 50 lagert, ist ein Bügel 62b verbunden, der sich teilweise mit einem oberen Abschnitt parallel zur Nockenscheibe 46 erstreckt und eine untere Nockenfläche bildet, die bei Eingriff mit dem Druckstift 58 diesen nach unten drückt in die Kupplungsausnehmung 62 der Scheibe 40.

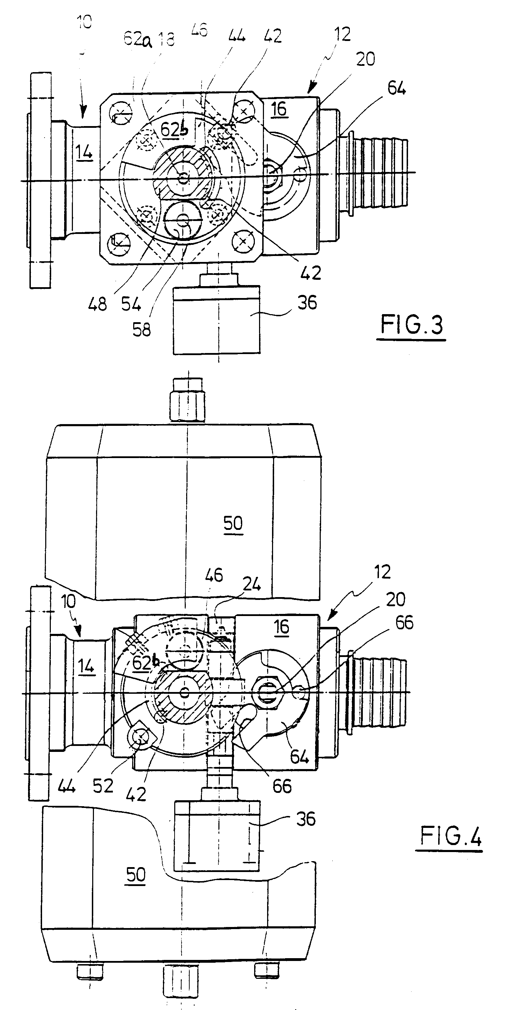

Eine zweite Nockenscheibe 64 sitzt drehfest auf der Schaltwelle 20. Ein Begrenzungsstift 66 begrenzt die Drehung der Nockenscheibe 64 auf einen Bereich von 90°, was der Schließ- bzw. Öffnungsstellung des Kugelhahns 16 entspricht. Die Nockenscheibe 64 weist einen radialen Schlitz 66 als Mitnahmeabschnitt auf, in den bei der Darstellung nach Fig. 3 der Mitnehmerstift 42 der Nockenscheibe 46 eingreift. Wird die Nockenscheibe 46 im Uhrzeigersinn gedreht, wird gleichzeitig die zweite Nockenscheibe 64 entgegengesetzt dem Uhrzeigersinn verdreht.

Die Betätigung der Kugelhähne 14, 16 läuft wie folgt ab. In Fig. 3 sind die Kugelküken der Kugelhähne 14, 16 in Schließstellung und in Fig. 4 in Öffnungsstellung. Sollen die Kugelhähne 14, 16 geschlossen werden, wird die Schaltwelle 18 in Drehung versetzt. Während der ersten 90°-Drehung (erster Mitnahmeweg) wird synchron die Nockenscheibe 64 entgegengesetzt dem Uhrzeigersinn verdreht, so daß der Kugelhahn 16 geöffnet wird. Der Kugelhahn 14 bleibt indessen geschlossen, weil eine Kopplung der Nockenscheibe 46 mit der Schaltwelle 18 über den Stift 42 nicht zustande kommen kann, weil dieser sich während des ersten Mitnahmeweges im Schlitz 44 bewegt. Wird die Schaltwelle 18 um weitere 90° gedreht (zweiter Mitnahmeweg), wird auch der zweite Kugelhahn 14 in Öffnungsstellung gebracht. In dem Augenblick, in dem der erste Mitnahmeweg beendet wurde, befindet sich der Druckstift 58 über der Kupplungsausnehmung 62 der Kupplungsscheibe 40. Während des zweiten Mitnahmewegs wird der Druckstift 58 durch die untere Nockenfläche des Bügels 62b nach unten gedrückt in die Ausnehmung 58 hinein.

Sollen die Kugelhähne 14, 16 wieder in die Schließstellung gebracht werden, wird die erste Nockenscheibe 46 entgegengesetzt dem Uhrzeigersinn verdreht. Während des ersten Verstellweges über 90° (zweiter Mitnahmeweg) wird der Kugelhahn 14 geöffnet, da die Scheibe 40 mit der Nockenscheibe 46 über den Druckstift 58 gekoppelt ist. Am Ende des zweiten Mitnahmewegs erfolgt eine Entkopplung, so daß die Nockenscheibe 46 sich während des ersten Mitnahmeweges frei drehen kann und in die in Fig. 3 gezeigte Stellung zurückgelangt.

Es versteht sich, daß eine Verriegelung zwischen der Betätigung der Bügel 22, 24 und der Öffnungs- bzw. der Schließbewegung der Kugelhähne 14, 16 vorgenommen werden muß, um sicherzustellen, daß die Kupplung nicht getrennt wird, während die Kugelhähne 14, 16 in Öffnungsstellung sind. Da der Verstellantrieb 50 und auch der Verstellantrieb für die Kupplung 36 hydraulisch ist, kann eine Verriegelung auf hydraulischem Wege bewerkstelligt werden.

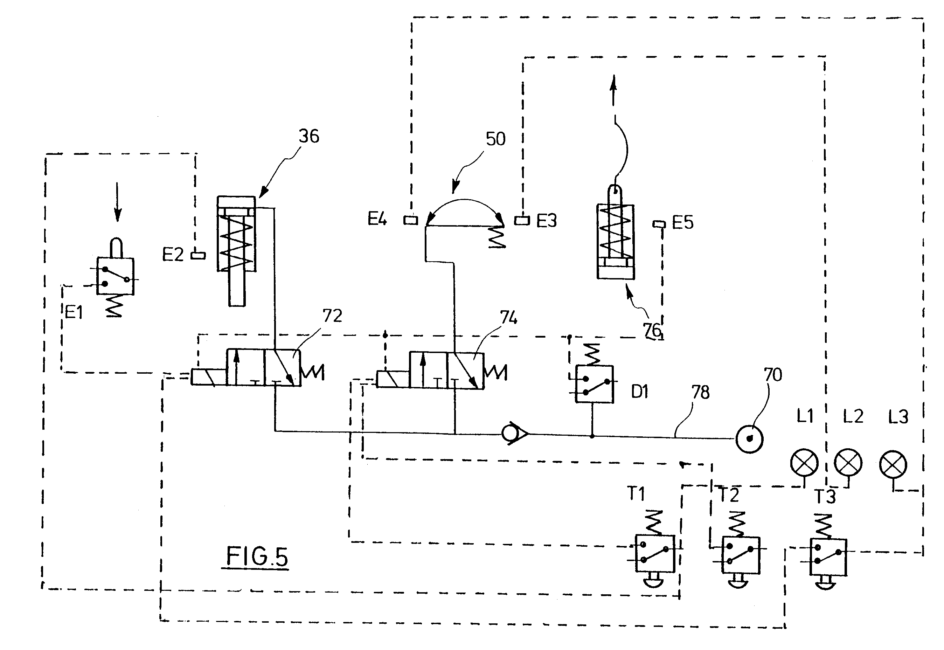

In Fig. 5 sind der erste Verstellantrieb 50 nach den Figuren 1 bis 4 und der zweite Verstellantrieb 36 schematisch dargestellt. Dem Verstellantrieb 36 ist ein Endschalter E2 zugeordnet und dem Verstellantrieb 50 zwei Endschalter E3 und E4. Wie erkennbar, werden die Antriebe 36, 50 von einer Druckluftquelle 70 über elektromagnetische Wegeventile 72, 74 betätigt. Eine Abreißsicherung 76 mißt den Zug zum Beispiel eines Schlauches, mit dem die Loshälfte 12 verbunden ist. Übersteigt dieser Zug einen vorgegebenen Wert, wird ein Endschalter E5 betätigt.

Der Festhälfte 10 ist ein Endschalter E1 zugeordnet, der betätigt wird, wenn die Loshälfte 12 an der Festhälfte 10 andockt. Ein Druckschalter D1 ist der Leitung 78 zu den Ventilen 72, 84 zugeordnet und spricht an, wenn der Druck in der Leitung 78 einen vorgegebenen Wert unterschreitet. Schließlich sind drei Tastschalter T1, T2, T3 und drei Leuchten L1, L2 und L3 vorgesehen. Die in Fig. 5 dargestellte Steuerschaltung arbeitet wie folgt.

Wird die Loshälfte 12 an der Festhälfte 10 angedockt, spricht der Schalter E1 an und löst automatisch die Betätigung des zweiten Verstellantriebs 36 aus, so daß die in Verbindung mit der in den Figuren 1 bis 4 dargestellten Verbindungs- und Trennvorrichtung durchgeführt wird, d.h. das Joch 34 betätigt wird, um die Klemmbügel 22, 24 radial zusammenzufahren und beide Kupplungshälften miteinander zu verspannen. Sobald diese Verriegelungsstellung erreicht ist, spricht der Schalter E2 an. Er gibt nunmehr die Betätigung des ersten Antriebs 50 frei, um die Kugelhähne 14, 16 in Öffnungsstellung zu bringen. Dies erfolgt über den Tastschalter T1. Sind die Kugelhähne 14, 16 in Öffnungsstellung, spricht der Schalter E3 an. Er sperrt auf diese Weise die Betätigung des Verstellantriebs 36 durch den Tastschalter T3. Sollen die Kugelhähne 14, 16 wieder in Schließstellung gebracht werden, erfolgt dies über den Tastschalter T2. Nach Beendigung der Verstellung spricht der Schalter E4 an, so daß nunmehr die Betätigung der Entriegelung über den Verstellantrieb 36 mit Hilfe des Tastschalters T3 vor sich gehen kann.

Die Leuchten L1, L2 und L3 zeigen an, wenn mit Hilfe des Verstellantriebs 36 eine Verriegelung erfolgt ist bzw. die Kugelhähne in der Schließ- bzw. Öffnungsstellung sind.

Spricht die Abreißsicherung 76 an, verursacht ein Signal vom Schalter E5, daß zunächst der Verstellantrieb 50 betätigt wird, beispielsweise über eine Betätigung des Schalters T2. Im Anschluß daran erfolgt automatisch eine Betätigung des zweiten Verstellantriebs 36, um eine Entriegelung der Kupplungshälften 14, 16 zu bewerkstelligen. Der gleiche Vorgang läuft ab, wenn der Druckschalter D1 anspricht, d.h. anzeigt, daß Gefahr besteht, daß ein Schließen der Kugelhähne 14, 16 über den Antrieb 50 nicht mehr stattfinden kann. Ist zum Beispiel der Druck der Druckquelle 70 6 bar, spricht zum Beispiel der Druckschalter D1 an, wenn in der Leitung 78 nur noch ein Druck von 4 bar herrscht.

Falls ein Strom- und/oder ein Druckausfall vorkommt, was über die elektrische Versorgung bzw. den Druckschalter D1 festgestellt wird, arbeitet das System auf gleiche Weise wie bei der Abreißsicherung. Die Federvorspannungen in den Verstellantrieben 36, 50 sorgen dafür, daß die Kugelhähne geschlossen werden und - anschließend, falls erforderlich - die Entriegelung der Kupplungshälften 14, 16 stattfinden kann.

## Patentansprüche

1. Kupplung zur Verbindung eines feststehenden Rohres mit einem beweglichen Rohr oder Schlauch, bei der jede Kupplungshälfte als Kugelhahn ausgeführt ist, wobei im gekuppelten Zustand die Kugelhahngehäuse totraumfrei aneinanderstoßen und über eine stirnseitige Ringdichtung gegeneinanderliegend und im Stoßbereich radial abgedichtet sind und bei der die Kupplungshälften mittels einer Verriegelungsvorrichtung im gekuppelten Zustand gehalten sind, die nur entriegelbar ist, wenn eine mit den Schaltwellen der Kugelhähne in Eingriff stehende Sicherheitsvorrichtung in Freigabestellung ist, wobei die Freigabestellung erreicht ist, wenn beide Kugeln in Schließstellung sind, dadurch gekennzeichnet, daß an einer Nockenscheibe (46) ein Mitnehmerabschnitt (52) vorgesehen ist, der mit einem Mitnahmeabschnitt (66) der zweiten Nockenscheibe (64) so zusammenwirkt, daß die zweite Nockenscheibe (64) bei Drehung der ersten Nockenscheibe (46) um einen ersten Mitnahmeweg in beiden Drehrichtungen von der ersten Nockenscheibe (46) mitgenommen wird, die erste Nockenscheibe (46) während eines zweiten Mitnahmewegs in beiden Drehrichtungen über Kupplungsmittel mit der zugehörigen Schaltwelle (18) koppelbar ist, jedoch entlang des ersten Mitnahmewegs von der zugehörigen Schaltwelle (18) entkuppelt ist.

2. Kupplung nach Anspruch 1, dadurch gekennzeichnet, daß ein Mitnehmerstift (52) an der ersten Nockenscheibe (46) mit einem radialen Schlitz (66) der zweiten Nockenscheibe (64) zusammenwirkt.

3. Kupplung nach Anspruch 2, dadurch gekennzeichnet, daß in der Schließstellung beider Kugelhähne (14, 16) die Achse des Schlitzes (66) annähernd senkrecht auf der Linie steht, die durch die Mitte der ersten Nockenscheibe (46) und ihren Mitnehmerstift (52) geht.

4. Kupplung nach einem der Ansprüche 1 bis 3, dadurch gekennzeichnet, daß ein sich durch einen bogenförmigen Schlitz in der ersten Nockenscheibe (46) erstreckender Kupplungsstift (42) fest mit der Schaltwelle verbunden ist und sich während des ersten Mitnahmewegs frei in einem Schlitz (44) der ersten Nockenscheibe bewegt, während des zweiten Mitnahmewegs in der einen Drehrichtung jedoch mitgenommen wird und zweite Kupplungsmittel (54, 58) den Kupplungsstift (42) und die erste Nockenscheibe (46) während des zweiten Mitnahmewegs in der entgegengesetzten Drehrichtung kuppeln.

5. Kupplung nach Anspruch 4, dadurch gekennzeichnet, daß der Kupplungsstift (42) auf einer auf der Schaltwelle sitzenden Kupplungsscheibe (40) angebracht ist, die eine Kupplungsausnehmung (62) aufweist, und an der ersten Nockenscheibe (46) ein federnd gelagerter Druckstift (58) vorgesehen ist, der während des zweiten Mitnahmeweges zur Kupplungsausnehmung (62) ausgerichtet ist und durch Betätigung von einer Nockenfläche in diese eingreift.

6. Kupplung nach einem der Ansprüche 1 bis 5, dadurch gekennzeichnet, daß mit der ersten Nockenscheibe (46) oder der zugehörigen Schaltwelle (18) ein erster Verstellantrieb (50) gekoppelt ist, ein zweiter Verstellantrieb (36) eine an einer Kupplungshälfte (10) angebrachte Verbindungs- und Trennvorrichtung (22, 24, 34, 38) betätigt, durch welche die Kupplungshälften (10, 12) in der Verbindungsstellung verriegelt werden, einer Kupplungshälfte (10) ein erster Schalter (E1) zugeordnet ist, der anspricht, wenn die Kupplungshälften (10, 12) in Verbindungsstellung sind und den zweiten Verstellantrieb (36) betätigt, daß dem zweiten Verstellantrieb (36) ein zweiter Schalter (E2) zugeordnet ist, der vom zweiten Verstellantrieb (36) betätigt wird, wenn er seine Verriegelungsposition erreicht hat und die Betätigung des ersten Verstellantriebs (50) freigibt, daß ein dritter Schalter (E3) vorgesehen ist, der den ersten Verstellantrieb (50) in der Öffnungsstellung der Kugelhähne (14, 16) betätigt und eine Betätigung des ersten Verstellantriebs (50) in die Schließstellung sperrt und ein vierter Schalter (E4) vorgesehen ist, der betätigt ist, wenn der erste Verstellantrieb (50) die Kugelhähne (14, 16) über die zugehörige Schaltwelle in Schließstellung gebracht hat und der die Betätigung des zweiten Verstellantriebs (36) freigibt.

7. Kupplung nach Anspruch 6, dadurch gekennzeichnet, daß der beweglichen Leitung eine einen Schalter (E5) enthaltende Zugsicherung (76) zugeordnet ist, die anspricht, wenn der Zug an der beweglichen Leitung einen vorgegebenen Wert übersteigt und die Zugsicherung (76) zunächst den ersten Verstellantrieb (50) und anschließend den zweiten Verstellantrieb (36) betätigt.

8. Kupplung nach Anspruch 6 oder 7, dadurch gekennzeichnet, daß erster und zweiter Verstellantrieb (50, 36) pneumatisch oder hydraulisch arbeiten und der Versorgungsleitung (78) für die Antriebe (50, 36) eine Drucküberwachung (D1) zugeordnet ist, die anspricht, wenn der Druck einen vorgegebenen Wert unterschreitet, wodurch zunächst der erste und der zweite Verstellantrieb (50, 36) betätigt werden.
